# EUROPEAN PATENT APPLICATION

(11) **EP 3 483 760 A1**
(43) Date of publication of application: **15.05.2019**
(21) Application number: 17201012.6
(22) Date of filing: 10.11.2017
(51) Int. Cl.: G06F 21/31, H04W 12/06, H04L 29/06

(54) **BROKERED DELEGATION OF CREDENTIALS USING TRUSTED EXECUTION ENVIRONMENTS**

(71) Applicant: ETH Zurich, 8092 Zurich (CH)
(72) Inventor: CAPKUN, Srdjan, 8049 Zürich (CH); MATETIC, Sinisa, 8046 Zürich (CH)

(57) **Abstract**

Method for delegating credentials for an online service from an owner of the credentials to a delegatee, comprising the following steps: receiving, in a trusted execution environment, the credentials of the owner to be delegated to the delegatee over a secure communication from a first computing device; accessing, from the trusted execution environment, a server providing said online service to be delegated on the basis of the received credentials of the owner; and allowing a delegatee the use of the accessed service from a second computing device under control of the trusted execution environment

## Description

### Field of the invention

The present invention concerns the confidential sharing of credentials.

### Description of related art

Many online services today require credentials. Credentials are for example the credit card details for an online payment, the combination of username and password for the access to a certain web page, etc. The owner of these credentials (in the following abbreviated by Owner) has to keep the credentials secret in order to avoid a misuse of the corresponding services.

Online service providers today exert almost complete control over the resource sharing by their users. If the users want to share data or delegate access to services in ways not natively supported by their service providers, they must resort to sharing credentials. This practice can be dangerous: an abused shared credit-card number can result in a significant monetary loss, while an abused shared password can result in service termination, high service charges, etc. These dangers naturally deter against many forms of online content and service sharing.

However, the ability to delegate access to accounts and services, safely and selectively, can give rise to many new ways of delegating work tasks, sharing digital content, paying by proxy, etc. For example, online email services do not allow the users to give read-only access to other users or to send content-specific e-mail from other users' addresses. Today, when such functionality is needed, account Owners must share their credentials with the Delegatees, who then gain full access to the Owners' accounts. Such delegation mostly works only in closed circles with high levels of mutual trust.

### Brief summary of the invention

The object of the invention is to create a technology which could improve the safe sharing of credentials without creating too much burden for the user or the service provider.

The object is achieved by a method, a system and a program according to the independent claims.

The use of a trusted execution environment for brokering the delegation of credentials to a delegatee empowers the owner of the credentials to delegate the use of a service based on the delegated credentials without compromising the confidentiality of the credentials. Since the use of the service by the delegatee is controlled through the trusted execution environment, a misuse by the delegatee could be prevented or detected.

The dependent claims refer to further embodiments of the invention.

### Brief Description of the Drawings

The invention will be better understood with the aid of the description of an embodiment given by way of example and illustrated by the figures, in which:
Fig. 1 shows a schematic diagram of the system and the method according to a first embodiment.
Fig. 2 shows a schematic diagram of the system and the method according to a second embodiment.
Fig. 3 shows a schematic diagram of a first application.
Fig. 4 shows a schematic diagram of a first application.
Fig. 5 shows a schematic diagram of a first application.
Fig. 6 shows a schematic diagram of a first application.

### Detailed Description of possible embodiments of the Invention

The main idea behind the system is to send the Owner's credentials (usernames, passwords, etc.) to a Trusted Execution Environment (TEE) that guarantees confidentiality of the credentials and eventually implements the delegation policy. The Delegatee communicates with the resource (the existing web service) indirectly, using the TEE as a proxy.

Modern TEE environments, most notably ARM Trust-Zone (registered trademark) and Intel Software Guard Extension (SGX) (registered trademark), enable isolated code execution within a user's system. Intel SGX is an instruction set architecture extension in certain processors of Intel. Like TrustZone, an older TEE that permits execution of code in a "secure world" and is used widely in mobile devices, SGX permits isolated execution of the code in what is referred to as secure enclaves. The term enclave is subsequently used as equivalent term for TEE. In TrustZone, transition to the secure world involves a complete context switch. In contrast, the SGX's secure enclaves only have user-level privileges, with ocall/ecall interfaces used to switch control between the enclaves and the OS. The SGX architecture enables the application developer to create multiple enclaves for security-critical code and protects the software inside from the malicious applications, a compromised OS, virtual machine manager, or bios, and even insecure hardware on the same system. Additionally, SGX includes a key feature unavailable in TrustZone called attestation. An attestation is a proof, consumable by any third party, that a particular piece of code is running in an enclave. Therefore, Intel SGX is the preferred TEE technology to use for the present invention. However, the invention works also well with other TEEs like TrustZone or others. Even if the following embodiments are realized and explained with Intel SGX, the invention shall not be limited to the use of Intel SGX.

The TEE provides runtime isolation. Runtime isolation means that all program code executed in an TEE cannot be observed or manipulated from outside the TEE. The outside of the TEE includes also the processor and/or the device on which the TEE is running itself/themselves. Therefore, the TEE provides a trusted and isolated environment, while everything outside of the TEE is untrusted. This means that not even a superuser of the system on which the TEE is running can observe the routines and data handled in the TEE. Preferably, the TEE reserves a portion of the processing hardware of a device on which the TEE runs. The portion can be allocated depending on the present requirements (as in Intel SGX) or could also be allocated constantly, e.g. by a separated secure hardware TEE. In Intel SGX a protective mechanisms enforced in the processor, from all software running outside of the enclave. The control-flow integrity of the enclave is preserved and the state is not observable. The code and data of an enclave are stored in a protected memory area called Enclave Page Cache (EPC) that resides in Processor Reserved Memory (PRM).

In one embodiment, TEE provides sealing. Sealing provides the encrypted and/or authenticated storage of TEE data for persistent storage. This allows to save confidential data across different executions of the same realization of the TEE or enclave. If for example a server with a TEE running on it is shut down, the data of the TEE can be saved in encrypted form until the TEE is started again. Sealing allows further to save larger amount of data, like databases, in encrypted form, if the data cannot be stored in the runtime memory of the TEE. The sealed data can only be read by the correct TEE. The encryption key and/or the decryption key (sealing key(s)) are only held by the TEE. In Intel SGX, the sealing key is derived from a Fuse Key (unique to the platform, not known to Intel) and an Identity Key (either Enclave Identity or Signing Identity).

In one embodiment, TEE comprises an interface with the outside which allows the exchange of data and/or commands with the unsecured/untrusted part of the system. In Intel SGX, the interface commands are called ocalls and ecalls. During an ocall/ecall all arguments are copied to trusted/untrusted memory and then executed in order to maintain a clear partition of trusted and untrusted parts.

In one embodiment, TEE comprises attestation. Attestation is the process of verifying outside of the TEE that a predetermined code has been properly initialized and/or executed in the TEE. Two types are distinguished: In local attestation a prover enclave request a statement that contains measurements of its initialization sequence, enclave code and the issuer key. Another enclave on the same platform can verify this statement using a shared key created by the processor. In remote attestation the verifier may reside on another platform. A system service called Quoting Enclave signs the local attestation statement for remote verification. The verifier checks the attestation signature with the help of an online attestation service that is run by Intel. The signing key used by the Quoting Enclave is based on a group signature scheme called EPID (Enhanced Privacy ID) which supports two modes of attestation: fully anonymous and linkable attestation using pseudonyms. These are just examples for realizing an attestation. Other embodiments are possible.

The system comprises the following three types of parties: credential Owner(s) A, Delegatee(s) B, and service(s) G. Additionally, the system distinguishes two data types: credential(s) C and access control policy(ies) P. The system supports a potentially large population of credential Owners A₁ ...Aₙ (henceforth referred to simply as Owners) and Delegatees B₁ ...Bₙ. In general, the Owner Aᵢ has access to a specific service Gₖ. The Delegatee Bⱼ is a user receiving the authorization of the Owner Aᵢ to use the service Gₖ accessed by the credentials of the Owner Aᵢ. The Delegatee Bⱼ does normally not have the access to service Gₖ, however he can get access to the service by using credentials Cₓ of the Owner Aᵢ. It is however possible that the Delegatee Bⱼ has also access to the same type of service with its own credentials, but prefers to use the service Gₖ with the credentials of Aᵢ. For example Aᵢ and Bⱼ might both have a credit card of the same company, but Bⱼ prefers for whatever reason to use the credit card credentials of Aᵢ. However, the Owner Aᵢ does not want to reveal the credentials for the service Gₖ to the Delegatee Bⱼ. The Owner Aᵢ wants his credentials to remain confidential and used only by an authorized Delegatee. Preferably, the Owner Aᵢ wants to restrict access to the services that she enjoys (i.e. Gₖ) according to an access control policy Pᵢⱼₓₖ specific to this delegation relationship. Pᵢⱼₓₖ denotes an access control policy defined for the brokered delegation relationship involving Owner Aᵢ, Delegatee Bⱼ, credentials Cₓ, and service Gₖ. Thus the subscript notation next to policy P. The type and structure of the access control policy depends on the service that the Owner delegates. Definition and enforcement of the policies are described in later. Owners and Delegatees are generically referred to as users. The service Gₖ is provided by a service provider over a communication connection, preferably an online or internet connection, to a service server of the service provider to anybody or anything that provides the required credentials for the service Gₖ.

The system comprises a first computing device controlled by the owner of the credentials, a second computing device controlled by the Delegatee and a TEE.

The first and the second computing device can be any general computing device such as a personal computer, a mobile computer, a notebook, a laptop, a tablet, a smartphone, a server, etc. The first computing device can be any general computing device used by the owner A to perform the subsequently described steps. The first computing device can also include different computing devices for performing different steps by the same Owner A. If an action or a step of the Owner A is described in the system, it shall be implicit that this step is performed by and/or via the first computing device. The second computing device can be any general computing device used by the Delegatee B to perform the subsequently described steps. The second computing device can also include different computing devices for performing different steps by the same Delegatee B. If an action or a step of the Delegatee B is described in the system, it shall be implicit that this step is performed by and/or via the second computing device. The first and the second computing device are preferably different comuting devices. However, it is also possible that the first computing device corresponds to the second computing device, wherein it is referred as first computing device, when under the control of the Owner A and, and as second computing device, when under the control of the Delegatee B.

There are two principal embodiments of the system. In the first embodiment, a decentralized peer-to-peer (P2P) system, the trusted execution environment is in the second computing device of the delegatee. In the second embodiment, subsequently called a centrally brokered system, the TEE is run on a credential server (hosted by third party), wherein the credential server being different from the first and/or second computing device.

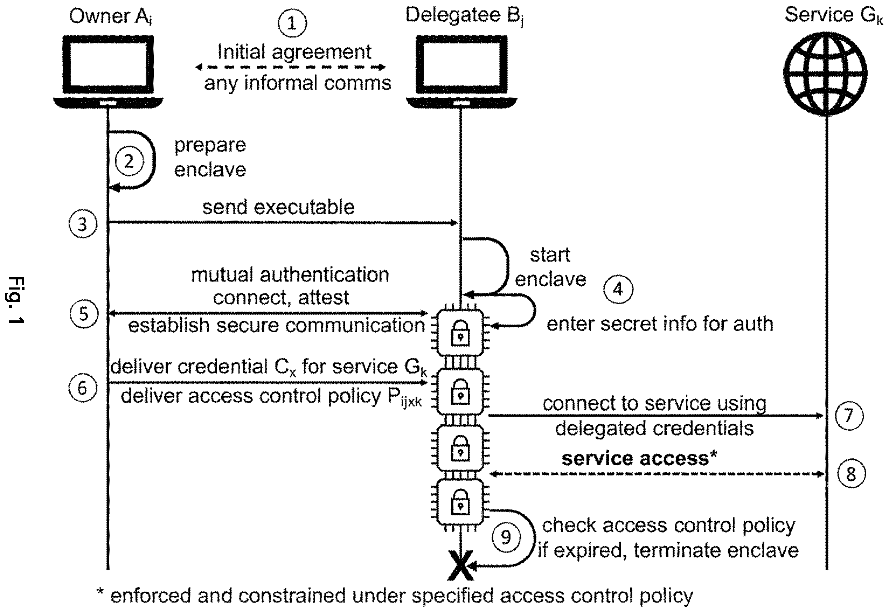

Fig. 1 shows the first embodiment with a P2P system. In a P2P system, there is no need for a central management entity to mediate between the Owners and the Delegatees. Due to the properties of TEE and the system, a Delegatee (from party B) can directly coordinate with the Owner (from party A) to gain access to a specific service G from a service provider. Note that in order to execute this setup, a Delegatee from party B has to have second computing device that supports TEE, preferably the execution of secure enclaves in Intel SGX.

The first computing device is in communication connection with the second computing device. This communication connection is normally an internet connection. However, it is also possible to establish another connection, e.g. over LAN, WLAN, Bluetooth, NFC, etc..

Below, the steps for the execution of the secure credential delegation of the embodiment of Fig. 1 are described.

In a first step, in order to execute the credential delegation, the Owner Ai agrees directly with the Delegatee Bⱼ for which specific service (Gₖ) the Owner will grant access using her credentials (Cₓ). The agreement is done purely at the discretion of the involved users and through any available channel such as online messaging, email, etc. Additionally, both entities need to establish a method for further authentication upon enclave start (e.g. pre-shared key, certificates) using a shared secret.

In a second step, after the agreement, Aᵢ prepares the enclave. In a third step, the Owner Aᵢ sends an executable to Bⱼ which shall establish the enclave in the second computing device. Alternatively, the executable used for establishing the enclave can also be prepared by and/or downloaded from a trusted source. Preferably, different TEEs are used for different service. The Owner and/or the Delegatee can verify the trustworthiness of the enclave to be created or created by the executable by attesting it. Here the enclave in the second computing device is initiated by an executable program. It is however also possible that the second computing device already includes the program for initiating the enclave and just some parameters are received at the second computing device for establishing the enclave.

In a fourth step, the Delegatee Bⱼ starts the enclave. This can be done automatically, when receiving the executable or upon an action of the Delegatee Bⱼ on the second computing device. Preferably, the TEE receives authentication information of the delegatee Bⱼ to assure that the TEE was indeed established by the delegatee Bⱼ which received the authorization of the Owner Ai to use the credentials of the service Gₖ. Fig. 1 show the example of secret information (shared secret exchanged during the initial agreement) as authentication information entered by the user. Other authentication information is possible as described in more detail later. The authentication information is needed for mutual authentication and secure connection establishment with the Owner Aᵢ.

In a fifth step, after the Delegatee Bⱼ starts the enclave, the Owner Aᵢ connects to the enclave, attests it to verify that it is the correct code with respect to the requested service delegation, and subsequently uses the authentication information to authenticate the delegatee Bⱼ and/or to create a secure communication channel, for example a TLS channel. However, the TEE can establish any secure communication between the first computing device and the TEE such as any kind of encryption in order to confidentially transmit the subsequently mentioned information.

In a sixth step, the Owner then sends the credentials Cₓ for the service Gₖ using the secure communication. Since the credentials Cₓ are sent over a secure communication between the first computing device and the TEE and since the data in the TEE are secured, nobody outside the first computing device which is under control of the Owner Aᵢ and outside the TEE has access to the credentials Cₓ. Thus, the delegated credential(s) Cx remain confidential. Preferably, the Owner sends also the access control policy Pᵢⱼₓₖ to the TEE such that the TEE can control the access of the delegatee Bⱼ to the service Gₖ in dependence of the policy Pᵢⱼₓₖ. Preferably, the access control policy Pᵢⱼₓₖ is also sent via the secure communication to the TEE.

In a seventh step, the Delegatee Bⱼ now uses the running enclave as a proxy to connect to the service Gₖ using the delegated credentials Cₓ.

In an eighth step, the TEE allows the Delegatee Bⱼ or the second computing device, respectively, the use of the service Gₖ accessed with the credentials Cₓ under the control of the TEE. Preferably, the TEE limits the scope of usage on the basis of the defined policy and therefore Delegatee Bⱼ cannot use the parts of the service not allowed by the Owner Aᵢ. The control of the usage of the service by the TEE on the basis of the access control policy is preferred. However, it is also an embodiment possible in which no access control policy is sent to the TEE and the TEE gives unlimited access to the service Gₖ with the credentials. If the access control policy has a time limit, the Delegatee Bⱼ 's access to the service is going to be terminated after the time has passed making the enclave unusable (ninth step), unless the Owner Aᵢ extends the policy. The enclave restarts do not change this fact, requiring the connection from the Owner Aᵢ to the enclave to deliver the information again. The enclave is stateless, meaning that any interruption, restart or termination of the enclave after the initial start and the delivery of confidential information is going to result in service abortion. Preferably, the TEE surveys the service accessed by the delegatee Bⱼ resulting in log data for the access of the delegatee. These log data are saved in the TEE and/or in the second computing device or are sent to the second computing device and/or to the first computing device. This allows to distinguish later who has accessed a certain service.

The agreement between the users and their mutual identification and authentication is preferred. The Owner needs to be certain that the enclave used to access a specific service with her credentials is running on the machine of the Delegatee with whom the initial agreement was done. Attestation only gives us the proof that the running enclave is executing the presumed code on a TEE supported second computing device, but without any information whether this second computing device is under control of the intended Delegatee. To allow mutual authentication between the Owner and the Delegatee, an authentication method needs to be established.

Several mechanisms for this authentication are possible. For one, the parties could use an out-of-band confidential and authenticated channel to exchange a shared secret key. After the enclave is started, the Delegatee enters this pre-shared key into the enclave. The Owner can now use the same pre-shared key to establish a TLS (PSK mode) session with the enclave. If an attacker attempts to establish an impostor or man-in-the-middle session with the Owner, the keys will mismatch. As an alternative, we could make use of a trusted PKI so that the Owner obtains a public key certificate associated with the Delegatee, and then they establish a regular TLS session. This requires the Delegatee to provide her private and public keys to the enclave. The invention is agnostic to the used authentication method; the described embodiment implements the first option.

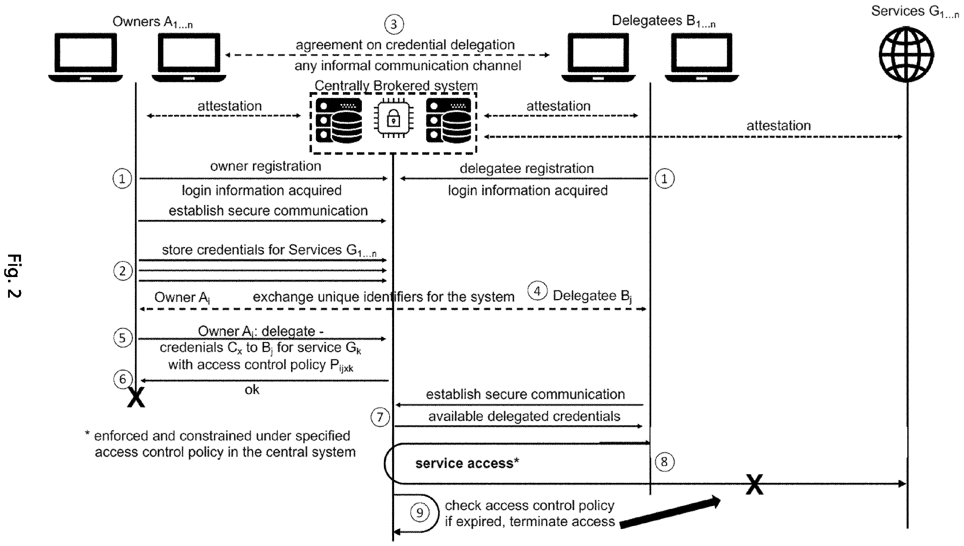

Fig. 2 shows the second embodiment of the invention. As an alternative to the P2P configuration described before, the second embodiment or the centrally brokered system comprises a central server unit (also called credential server) that mediates all transactions and communication between the involved parties and also serves as a management entity. The server has a TEE (e.g. SGX enclave) that performs security-critical operations. Thus, the system running on the server can be attested to verify the running code and authenticated to verify the service provider. In this case, the Owners and the Delegatees do not need to have SGX, since all security critical operations are done on the server. Below the steps of the second embodiment are described. The credential server provides the credential brokering service, preferably over internet, to registered users. Preferably, the credential brokering service is provided by a TEE on the credential server. The credential server can comprise also several servers to increase the processing capacity of the credential server. Those several servers could also be arranged at different locations.

In a first step, the owner Aᵢ and the delegatee Bⱼ need to register to the credential brokering service. The system can allow multiple users to register. The users can either act as register as flexible user being both owner and delegatee or register as owner limited to delegating own credentials or as delegatee limited to receiving delegated credentials of others. The registration of the users allows authentication. Upon registration, each user acquires unique login information (username and password) for access to the system. After registration, both Owners and Delegatees can execute delegation and/or service access operations. Obviously, the registration of the owner Aᵢ and the delegatee Bⱼ needs to be done only once and does not need to be done with each delegation process for the credentials Cₓ for the service Gₖ. Once registered, the users can always log-in the system to upload credentials, to delegate uploaded credentials to a delegatee and/or to access a service Gₖ on the basis of delegated credentials received by an owner.

In a second step, the Owners A₁ ...Aₙ can now establish a secure channel to the TEE on the credential server (using the ordinary web PKI) and start storing the credentials C₁ ...Cₙ for the specific services G₁ ...Gₙ. The variety of credentials that can be stored depends preferably on the supported use cases and services (see below for more details).

In a third step, the Owners A₁ ...Aₙ may agree directly with the Delegatees B₁ ...Bₙ for which specific service (Gₖ) the Owner will grant access using her credentials (Cₓ). This agreement can be given on the credential server, when the owner is logged in. The agreement can be done purely at the discretion of the involved users through any available out-of-band channel. The agreement is normally limited by the implemented technical capabilities of the server system.

In a fourth step, during the agreement, the users exchange their unique identifiers (for example username or pseudonym for the system) so that the Owner from party A knows whom to authorize from party B.

In a fifth step, the Owner Aᵢ establishes a secure channel to the TEE on the credential server, specifies for which of her stored credentials (Cₓ ) he wants to perform the delegation, for which service (Gₖ) and to whom (username of the Delegatee Bⱼ), while he additionally specifies the access control policy Pᵢⱼₓₖ on how the delegated credentials should be used.

In a sixth step, after receiving the confirmation, Owner Aᵢ disconnects. This is obviously an optional step and the user Aᵢ can also remain logged-in for other user of the system.

In a seventh step, the Delegatee Bⱼ receives the accessed service Gₖ from the TEE. Preferably, the second computing device is connected over a secure channel, preferably a https connection, with the trusted execution environment on the credential server, wherein the service accessed by the trusted execution environment is forwarded over the secure channel to the second computing device. Ordinary web PKI can be used to establish the secure channel. Preferably, the delegatee immediately see that she has been delegated credentials for a certain service, when logging in and/or when having established the secure channel with the TEE. The credentials are hidden and the Delegatee Bⱼ may only observe the intended service where the credentials can be used. If the Delegatee wants to access the service Gₖ, he may proceed.

In the eighth step, the access to the service is always proxied through the TEE on the credential server, and no direct communication occurs between the Delegatee and the service Gₖ itself. Any attempt to circumvent these properties results in protocol termination. E.g., if the user clicks an external link to move from the proxied service, the session is lost and connection terminated.

In a ninth step, after the defined access control policy expires (e.g. if it is time limited) the Delegatee Bⱼ loses access and the credentials are no longer delegated.

In one embodiment, the TEEs as described above have two operation modes that can be chosen and set prior to the execution. In case of the Centrally Brokered system, the enclave retrieves all important data regarding services, credentials, and access control from the management and operations enclave, while in case of the P2P system, the enclave awaits the connection from its issuer to receive all the necessary information. Also note that in the case of the Centrally Brokered system, the Owners and the Delegatees can have double roles (the Delegatee can also be an Owner of some credentials that are delegated to a third user, and vice-versa).

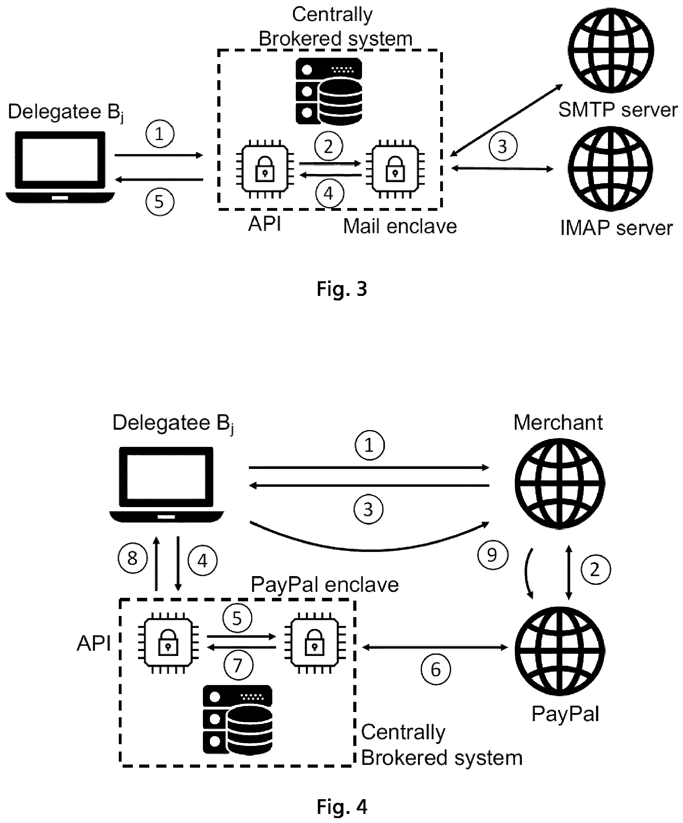

In one embodiment, the Centrally Brokered Systems runs one TEE which handles the user authentication, the storage of the credentials and the process of granting a delegatee access to a delegated service. In another embodiment, the Centrally Brokered System can run different TEEs. For example one management TEE for the user authentication, credential receival from the owners and/or storing the credentials of the owners. At least one second TEE could manage the access too the delegated service, the forwarding of the accessed service to the delegatee and/or the control of the accessed and/or forwarded service. The at least one second TEE and the management TEE could communicate over secure channel such that the management TEE can send the credentials Cₓ and the Policy Pᵢⱼₓₖ to the at least one second TEE for a certain delegation job. The at least one second TEE could comprise different application TEEs for different services or service types. For example one TEE for credit card payments another for mail logins etc. When the management TEE receives the delegation of credentials Cₓ from Aᵢ for the delegatee Bⱼ for the service Gₖ, the management TEE could select the respective application TEE on the basis of the delegated service Gₖ and send the credentials and the Policy Pᵢⱼₓₖ to the selected application TEE. This has the advantage that the code of each TEE can remain light and new applications can simply be implemented by adding new application TEEs. It is also possible, that each application TEE or each of the at least one second TEE is created by the management TEE for each delegation job (similar to the concept of P2P). The management TEE is abbreviated in the Fig. 3 to 6 API. In another embodiment, it is also possible to run maybe a part of the tasks of the credential server outside of an TEE, for example the user registration, authentication and the site management. Only the security relevant jobs, like credential storage and the actual credential delegation are performed in an TEE.

Preferably, all communication between the users, the enclaves and the browser extension is done using a secure channel, preferably TLS, preferably with replay protection.

The system can be applied in two different use models depending on the level of anonymity between the users that are involved in credential delegation.

In an anonymous model, the credential delegation is designed in such a way that it protects the Owner's anonymity and secrecy of her credentials. Thus, two unknown parties may agree on the credential delegation without explicit interaction. For example, there might exist a bulletin board (available on the Centrally Brokered system) that allows the Owners to list the services along with the access control policies for credentials that they want to delegate publicly. These listings do not have to contain any identifying information of the user since the system in the background knows all the necessary details. In return for using these credentials the Owner can ask some compensation or might not ask anything - it can be a sharing economy that develops on its own. A potential Delegatee can search the bulletin board for a specific service that she needs but has no access to. If she finds the appropriate offer, she books it and may start using it. For example, the Delegatee Bj does not have a Netflix (registered trademark), pay-to-stream, account but wants to watch a Netflix original TV series that is running only there. The Owner Aᵢ has a Netflix subscription that allows her to watch simultaneously on two devices at the same time. The Owner Aᵢ is alone and has only 1 device, thereby having the ability to watch Netflix for free on another device rendered useless. However, using the anonymous model of our system Aᵢ can post on the bulletin board offering access to her Netflix account for one device and for a limited time frame, asking in return some small compensation. Delegatee Bj sees this post and responds. After the compensation is made, the Delegatee Bj gains access in order to watch the desired TV series. After the agreed conditions expire, the Delegatee Bj closes access. Ai and Bj have no knowledge about each other but they have successfully executed a transaction between them and expanded the usability of existing services. In the case of P2P model, the bulletin board can be hosted on a third-party website with users' pseudo IDs, while the agreement and communication, as explained previously, can go through the TOR network, thus retaining privacy on the bulletin board access and in the communication between different users.

In a denominated model, the users know each other in some way, have a communication channel and can mutually identify each other. The Owner directly delegates her credentials to a specific Delegatee. Common use case examples include family sharing, delegation between friends and acquaintances, work colleagues, etc.

Some services G require a task to be performed by a human before providing the service to exclude any service request by computers. In one embodiment, the task given from the service provider when requesting the service G, is forwarded by the TEE to the Delegatee B. The Delegatee B inputs the solution of the task which is then forwarded by the TEE to the service provider in order to reply to the task. One such system is called captcha. Captcha may be required as an additional authentication step at the login of the service. This issue could be overcome by extracting a secret image given by captcha, presenting it to the Delegatee trough a pop-up created by a browser extension, allowing him to solve it and continue with executing the desired operation.

Securely enforcing defined policies presents a challenge on its own. We aim to respectively prevent all internal and external attackers from modifying the policies or circumventing the enforcement by applying a combination of allowed action in order to reach a desirable state. It remains on the Owner to choose an appropriate access control policy in the first place. An Owner who wants to delegate restricted access for a specific service needs to be able to define all allowed actions through a rich access control policy, denoted as Pᵢⱼₓₖ. For increased security, we prefer the white-listing of operations based on the least-privilege methodology in order to prevent unwanted access and usage of the delegated account. Unfortunately, a general model for a wide variety of different services is difficult. For every specific service category that should be addressed, and sometimes even for every specific service provider operating in the same category, a new policy should be created that resembles the exact capabilities and actions which a fully allowed user may invoke.

A system that provides secure delegation of credentials for access control should be limited to only those service categories and providers whose operational environments have been properly researched and investigated in order to adapt our brokered delegation system without compromising the end users.

In the following policies for the applications: mail usage, payments, and full website access are described.

In mail, the system relies on the IMAP and SMTP protocols which are standardized and well defined. Inside the secure enclave we parse all incoming and outgoing request (to and from the Delegatee) and compare them against access policy defined by the credential Owner. Consider, as a concrete scenario, the organizer of a conference wishes to delegate her email account to an assistant for the task of responding to logistical questions from conference attendees. The Delegatee should be granted read access to only subset of the organizer's email (defined by a regular expression query like (*#SP18*), for example). The organizer would also likely wish to enforce restrictions on how messages could be sent by the recipient. Rather than sending to any possible email address, the assistant may only be allowed to reply to emails that have already been received and deleting emails should be prevented. In general, for the inbox requests the Delegatee can be limited to a specific subset of emails based on criteria such as date, time, sender, subject or content of the main body. In outgoing requests, the limitation may again be set on the content of the subject or main body of the email, and the intended recipient(s). An additional mitigation supported in this scenarios is a policy that rate-limits the number of emails that may be sent within a time interval, and that applies a spam and abuse filter for outgoing messages.

In payments, the main restriction is concentrated on limiting the allowed amount per transaction or the total amount using the delegated credential for either a credit card or any other third party payment service. Additionally, the system can enforce restrictions on the source, limiting the Delegatee to perform payments only on specific sites or identified merchants/services, and white-listed geographical locations based on the IP address.

In the full website access example, the system supports limiting the use of login credentials to specific sites. E.g., the Owner can have the same credentials for two different services. However, full access is only achieved to the site allowed by the defined policy. The policies could include to restrict specific actions on sites after the login step, including but not exclusively, clicks on various links, loading of specific site content or limited access to the account settings pages.

The Owner only needs to configure the value of the policy attributes (e.g., time limit, max amount, regular expression, etc.). In principle, the credential Owners could describe their own delegation policy in a general programming language.

In the following, various applications for the described system are described in the following. The applications are described without limitation of the invention with the Centrally Brokered system. The application can be analogously applied to the P2P embodiment. All enclaves rely on the OS to handle incoming and outgoing TCP connections while the SSL endpoints reside in the trusted enclaves. The exemplary applications for delegated use of mail, PayPal, credit card/e-banking, and full website access through an HTTPS proxy are described in the following. Additionally, a fifth enclave was implemented to authenticate the users and store credentials.

In all the application details outlined below it is presumed that the Owner Aᵢ (short A) and Delegatee Bⱼ (short B) already registered to the system (e.g., they can log in with the username/password) and that the Owner authorized the Delegatee by storing the redentials Cₓ (short C) and defining the access policy Pᵢⱼₓₖ (short P) for a specific service. Thus, the Owner Aᵢ is not shown in the figures.

Fig. 3 shows the application of the delegation of an email account under a specific access policy. Simple IMAP and SMTP clients are implemented to allow a Delegatee B to read and send emails using the delegated credentials C. The following steps are preformed.

In a first step, the Delegatee B wants to use some credentials C that have been delegated by A. B connects securely to the centralized API using her username and password (for P2P model the communication is established as described above, with both methods supported). He then requests to either read some emails or to send a new email using the credentials C.

In a second step, the API verifies that the Delegatee has access to C and then forwards the request, C and the corresponding policy P to the mail enclave (a second TEE running on the server responsible for granting access to delegatee B (or multiple delegatees) to email accounts with delegated credentials C).

In a third step, the mail enclave connects to either the SMTP server (for sending mail) or the IMAP server (for receiving mail) and executes the requested operation.

In a fourth step, the policy P gets applied to the response from the external servers (IMAP) or to the outgoing requests (SMTP) and the resulting response gets forwarded to the API.

In a fifth step, the API delivers the final response to the delegatee B.

A second application is the payment via PayPal (registered trademark) which is shown in Fig. 4. PayPal does not want to endorse giving away your credentials or automating the payments as this could compromise their security. Thus it is non-trivial to automate PayPal payment and there is no public application programming interface. The TEE for the payment via PayPal must emulate a browser inside that accurately simulates a real user. Normally the payment process relies on a javascript library but running a javascript interpreter in Intel SGX would bloat the TCB, not to mention the security implications of running an unmeasured, externally provided script inside an enclave. The no javascript fallback mechanism from PayPal is used instead. The emulated browser follows, redirects, fills any known forms, and handles cookies until the final confirmation page is reached. The enclave then returns confirmation id to the issuer that is then used by the merchant to finalize the payment. In one embodiment, a browser extension is used at the second computing device that simplifies the use of delegated PayPal credentials by adding a delegated checkout button next to the PayPal checkout button if the Delegatee is logged in to our system and has some delegated credentials. Upon clicking on the delegated checkout, the Delegatee can choose one out of the available PayPal credentials delegated to him and then the automated payment process starts. After that, no further user interaction is needed and the Delegatee will be forwarded to the confirmation page of the merchant if the payment succeeds. The steps of a payment via PayPal with delegated credentials C are described below.

In a first step, the Delegatee B wants to buy something from a merchant using credentials C that have been delegated by A. B connects to the merchant and asks for a PayPal payment.

In a second step, the merchant uses the PayPal application programming interface to create a payment.

In a third step, the payment is then forwarded to B.

In fourth step, B connects securely to the centralized API using her username and password (for P2P model the communication is established as described above, with both methods supported). She then requests to pay with PayPal using C.

In a fifth step, the API verifies that the user can access to C and then forwards the request, C and the corresponding policy P to the PayPal enclave.

In a sixth step, the PayPal enclave connects to PayPal and pays the PayPal payment with C if it is allowed by the policy P. The PayPal service responds with a confirmation number.

In a seventh step, the confirmation number is forwarded to the API.

In an eighth step, the API delivers the confirmation number to B.

In a ninth step, B forwards the confirmation number to the merchant and then the PayPal payment is finalized by the PayPal API using the received confirmation number.

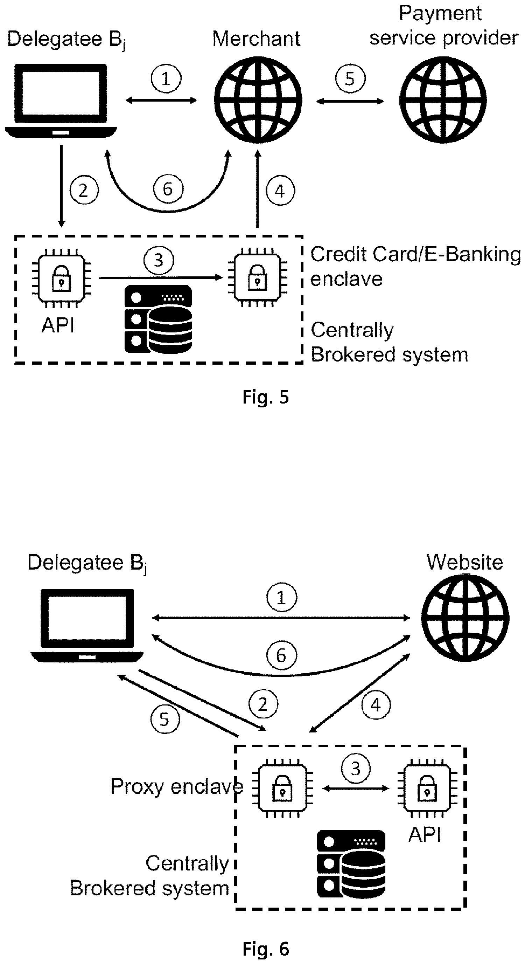

A further application is the payment via Credit card/e-banking credentials as shown in Fig. 5. Payments via Credit card/e-banking credentials are similar to PayPal payments: upon checkout on the merchant's website, the browser extension is triggered if the payment form is available. The Delegatee B can choose to pay with any of the delegated credentials that he is authorized to use. The enclave fills the form with the credentials received either from the centralized API or directly from A using the P2P model. The steps of such a payment is shown below.

In a first step, the Delegatee B wants to buy something from a merchant using some credentials C containing credit card or e-banking information that have been delegated by A. B connects to the website and the browser extension renders a second button beside the normal credit card and e-banking credentials submit button.

In a second step, upon clicking the injected button, the browser extension requests a payment with C from the API.

In a third step, the API verifies that the user has access to C and then forwards the request, C and the corresponding policy P to the credit card/e-banking enclave.

In a fourth step, tenclave fills C into the request while taking the policy P into account and forwards it to the merchant.

In fifth step, final payment is done by the payment service provider.

In a sixth step, response is routed through the enclave and API to B.

A further application is the Full Website Access via delegated credentials as shown in Fig. 6. For secure browsing a HTTPS proxy enclave is implemented. Selected websites are proxied and if a user leaves the website, he also leaves the proxy. This is implemented using cookies to set the correct host name. The user sends any request to the proxy and he sets a cookie with the host name he wants to visit through the proxy. The enclave then parses the request, replaces the host name and sends it on to the real website. The response is also modified by the enclave so that the host name points to the proxy again. All links in the response are left unmodified so all relative links point to the proxy but all absolute links direct to a different website. The website certificates are checked against the statically compiled root certificate list in the enclave. For logging into a service using delegated credentials similar technologies as in the HTTPS proxy are leveraged. The proxy enclave is extended to support delegated authentication for websites. Analogous to the HTTPS proxy cookies to specify the Delegatee's session token and which credentials C she wants to use. The enclave then asks the API whether the Delegatee with the specified session token is allowed to use C. If everything checks out, the API responds with the details of C and P and the proxy enclave fills the login form before forwarding it to the website. As websites session tokens are usually stored in cookies, all cookies forwarded to and from the website are encrypted in order to prevent session stealing by an adversarial Delegatee. The implemented browser extension is used in the same way as in the PayPal example: a button is rendered to the side of the login button. Upon clicking the Delegatee can select the credentials she wants to use and is then logged in with them. The steps of such a delegated website login is described below.

In a first step, the Delegatee B wants to log into a website using some credentials C that have been delegated by A. B connects to the website and the browser extension renders a second button beside the normal login button.

In a second step, upon clicking the injected button, the browser extension changes the URL to point to the proxy and appends cookies to the request, specifying the credentials B wants to use.

In a third step, the proxy asks the API for C. The API checks if B has the rights to use C and then forwards C to the proxy.

In a fourth step, the proxy enclave fills in the username and password into the login request and proceeds to send it to the website and receives the response.

In a fifth step, the proxy rewrites the header of the response to encrypt cookies and then forwards it to B.

In a sixth step, all subsequent connections have to go through the proxy where the policy P can be enforced.

The latter application can for example be used to allow a delegatee B the use of the social media account like facebook, twitter, Instagram, Google+, linkedin, etc of the owner A. The policy P could allow the delegatee B for example to post a certain number posts per time period in the name of the owner A on the social media account of the owner A.

## Claims

1. Method for delegating credentials for an online service from an owner of the credentials to a delegatee, comprising the following steps:
receiving, in a trusted execution environment, the credentials of the owner to be delegated to the delegatee over a secure communication from a first computing device;
accessing, from the trusted execution environment, a server providing said online service to be delegated on the basis of the received credentials of the owner;
allowing a delegatee the use of the accessed service from a second computing device under control of the trusted execution environment.

2. Method according to the previous claim, wherein the trusted execution environment is configured such that the device on which the trusted execution environment is running and/or the second computing device cannot read the credentials received in the trusted execution environment.

3. Method according to one of the previous claims comprising the step of receiving, in the trusted execution environment, an access control policy from the first computing device, wherein the use of the accessed service from the second computing device is allowed by the trusted execution environment under constraints defined in the access control policy.

4. Method according to one of the previous claims, wherein the trusted execution environment sends an attestation of running a determined software code to the first computing device, wherein the first computing device sends the credentials to the trusted execution environment only if the received attestation was approved.

5. Method according to one of the previous claims, wherein the trusted execution environment is in the second computing device.

6. Method according to claim 5, wherein the second computing device receives a program and executes the received program, wherein the executed program causes the creation of said trusted execution environment on the second device and the steps performed by the trusted execution environment.

7. Method according to claim 5 or 6, wherein the trusted execution environment is in the processor of the second computing device.

8. Method according to one of claims 1 to 4, wherein the trusted execution environment is in a credential server.

9. System for delegating credentials for an online service from an owner of the credentials to a delegatee, comprising:
a trusted execution environment;
a first computing device for sending the credentials of the owner over secure communication to the trusted execution environment;
a second computing device for providing the delegate access to the online service based on the delegated credentials;
wherein the trusted execution environment is configured to
accessing a server providing said online service to be delegated on the basis of the received credentials of the owner,
acting as a proxy between the second computing device and the server for providing the accessed service from the server to the second computing device.

10. System according to claim 9, wherein the trusted execution environment is in the second computing device.

11. System according to claim 9 comprising a credential server, wherein the trusted execution environment is in the credential server.

12. System according to claim 11, wherein the credential server stores credentials of different owners registered with the credential server, wherein credential server is configured to allow a registered owner to upload credentials and/or to delegate the use of credentials to a delegatee that is preferably registered as well with the credential server.

13. System according to claim 11 or 12, wherein the credentials of the owner(s) are stored on the credential server in encrypted form such that only the trusted execution environment can decrypt the stored credentials.

14. System according to one of claims 12 to 14, wherein the trusted execution environment comprises a first trusted execution environment for receiving and eventually storing the credentials of the owner and at least a second trusted execution environment for accessing the server and for acting as a proxy between the server and the second computing device, wherein the first and the second trusted execution environment communicate over a secure channel.

15. Computer program configured to perform the following steps when executed on a processor:
establishing a trusted execution environment in the processor, receiving, in the trusted execution environment, over a secure communication from a first computing device the credentials of the owner to be delegated to the delegatee;
accessing, from the trusted execution environment, a server providing said online service to be delegated on the basis of the received credentials of the owner,
granting a delegatee on a second computing device access to the accessed service.
